(19) Europäisches Patentamt
European Patent Office
Office européen des brevets

(11) Publication number: **0 002 596**
**B1**

(12) # EUROPEAN PATENT SPECIFICATION

(45) Date of publication of patent specification: **27.07.83**

(51) Int. Cl.³: **C 08 G 12/00**

(21) Application number: **78300784.2**

(22) Date of filing: **11.12.78**

(54) **Method for reducing the amount of free formaldehyde in an amino formaldehyde resin.**

(30) Priority: **20.12.77 GB 5301777**
**11.04.78 GB 1422178**

(43) Date of publication of application:
**27.06.79 Bulletin 79/13**

(45) Publication of the grant of the patent:
**27.07.83 Bulletin 83/30**

(84) Designated Contracting States:
**BE DE FR NL**

(56) References cited:
**DE - C - 942 351**
**GB - A - 542 972**

**CHEMICAL ABSTRACTS, vol. 83, 80275v no. 10, September 8, 1975, Columbus, Ohio, USA, ZYGMUNT WIRPSZA "Amino resins with low content of free formaldehyde".**

**The file contains technical information submitted after the application was filed and not included in this specification**

(73) Proprietor: **BEROL KEMI AB**
**S-444 01 Stenungsund (SE)**

(72) Inventor: **Holmberg, Krister Axel**
**Dalgangsgatan 17 A**
**S-431 39 Molndal (SE)**

(74) Representative: **Goldin, Douglas Michael et al,**
**J.A. KEMP & CO. 14, South Square Gray's Inn**
**London WC1R 5EU (GB)**

**EP 0 002 596 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Method for reducing the amount of free formaldehyde in an amino formaldehyde resin

The present invention relates to a method for reducing the amount of free formaldehyde in amino formaldehyde resins.

Amino formaldehyde resins are normally divided into two main groups, melamine formaldehyde resins and urea formaldehyde resins. The two types of resin are synthesised by analogous methods; melamine or urea is reacted with formaldehyde to form methylol melamine or methylol urea respectively, the methylol compounds reacting further by condensation to form a resin. Any remaining methylol groups are then partially alkylated by reaction with a lower aliphatic alcohol. The resin is then normally delivered ready for use as a solution in water or an organic solvent.

In these syntheses, the reaction between the melamine or urea and the formaldehyde is carried out with a large excess of formaldehyde. Even if the resulting resin is subjected to a prolonged evaporation at atmospheric or even under reduced pressure, it is difficult to remove all the unreacted formaldehyde. Most amino formaldehyde resins available on the market have a free formaldehyde content around 3% by weight. This level of free formaldehyde will normally not disqualify the resin for use as a binder in paints and lacquers as the major part of the formaldehyde will evaporate together with the solvent and other low molecular weight compounds at an early stage of the curing reaction.

On the other hand, it must not be overlooked that the use of amino formaldehyde resins having a high content of free formaldehyde involves certain risks to health. Thus, formaldehyde has a threshold limit value of 2 ppm and in rats, an aqueous solution of formaldehyde has an oral $LD_{50}$ value of 800 mg/kg, which means that formaldehyde is a rather toxic substance. Furthermore, formaldehyde has an acrid, pungent smell, which even in low concentrations is unpleasant to inhale.

In the last decade, great efforts have been made to reduce the content of free formaldehyde in amino formaldehyde resins. One method of achieving this involved addition of more urea or melamine to the reaction mixture at the end of the synthesis so that the urea or melamine could react with the remaining formaldehyde. By this procedure, it is possible to reduce the free formaldehyde content from about 3% to about 1% by weight, but in order to meet the environmental demand of today, it is desirable to decrease the free formaldehyde concentration below 1% and preferably below 0.5% by weight.

Polish Patent Specification No. 72885 describes a process for reducing the free formaldehyde content of amino/formaldehyde resins by treating a solution of the resin at 0—60°C with acetone or acetaldehyde, adjusting the pH to more than 10.5 and then reducing the pH to a suitable level for storage of the treated resin.

The present invention provides a process for the preparation of an amino/formaldehyde resin having a concentration of free formaldehyde less than 1% by weight, which comprises treating a preformed amino/formaldehyde resin containing free formaldehyde with a carbonyl compound which is chloro-2-propanone, 5-hydroxy pentanal or a ketone containing at least one $\alpha$-hydrogen atom and having 4 to 15 carbon atoms. The carbonyl compounds used according to the invention have at least one $\alpha$-hydrogen atom i.e. hydrogen bonded to a carbon atom not included in a functional group, said carbon atom being directly bonded to the carbonyl carbon atom.

Preferred ketones used in the process of the invention are those having the general formula:

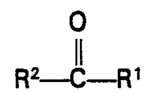

I

wherein $R^1$ and $R^2$ are each a hydrocarbon group which may optionally be substituted with an electron attracting moiety or $R^1$ and $R^2$ together with the group —CO— form a cyclic group having 4 to 8 carbon atoms in the ring, which ring may optionally be substituted with an electron attracting moiety. Examples of suitable electron attracting group substituents are halogeno, such as bromo, iodo or chloro, hydroxy, nitro, lower alkoxy, lower acyl, lower alkoxycarbonyl, and lower acyloxy. 'Lower' in relation to these last mentioned four groups means groups with 4 or less carbon atoms. $R^1$ and $R^2$ may be the same or different and preferably, subject to the requirement for a total of at least 4 carbon atoms in the ketone, $R^1$ is an alkyl group having 1 to 8 carbon atoms, $R^2$ an alkyl group containing 1 to 8 carbon atoms or $R^1$ and $R^2$ together with the carbonyl group form a ring having 4 to 8 ring carbon atoms. Thus, the carbonyl compound will contain at least one carbonyl group having at least one hydrogen atom bonded to a carbon atom itself directly bonded to the carbonyl carbon atom. In addition, the carbonyl compound may contain further functional moieties which may be additional carbonyl groups or other electron attracting moieties of the type mentioned above.

When the carbonyl compound is a ketone, the treatment of the invention can, if desired, be carried out in the presence of ammonia or a primary or secondary nitrogen containing base having a molecular weight of less than 900. The nitrogen-containing base may be ammonia or a primary or secondary amine of the general formula II

$$R^3—(NH—A)_nNH—R^4 \qquad II$$

wherein $R^3$ and $R^4$, which may be the same or different, each is hydrogen or a hydrocarbon group which may optionally be substituted with a hydroxy group, or $R^3$ and $R^4$ together with the group $(NH—A)_nNH$ form a cyclic group having 4 to 8 ring atoms, A is a bivalent hydrocarbon group preferably having 1 to 6 carbon atoms and n is 0 or an integer from 1 to 6. Preferably $R^3$ is hydrogen, and $R^4$ is hydrogen or a hydrocarbon group having 1 to 6 carbon atoms and n is 0. The ammonia or nitrogen containing base can be introduced in the form of a salt e.g. with an inorganic or organic acid.

The process of the present invention is carried out on a preformed amino formaldehyde resin containing free formaldehyde. By "preformed" we mean that the condensation reactions between the reactants forming the resin are substantially completed before introduction of the carbonyl compound used in accordance with the present invention.

Although it is necessary that formation of the resin be substantially completed before the resin is treated with the carbonyl compound in accordance with this invention, it is not essential that the resin be purified before treatment in accordance with the invention but some purification can be carried out beforehand if desired. Conventional manufacturing methods produce resins containing about 3% by weight free formaldehyde and the present invention is capable of reducing this free formaldehyde content to less than 1% by weight. The amino formaldehyde resins of low free formaldehyde content obtained by the present invention can be used in the same way as conventional amino formaldehyde resins, e.g. they may be used as binders in paints and lacquers, in chip and fibre boards, and in composite materials; as the essential component in shaped articles and as filler materials.

When the carbonyl compound is used without the nitrogen containing base, it is believed that the free formaldehyde is removed by an Aldol reaction e.g. in accordance with the equation

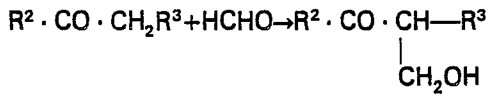

where $R^3CH_2—$ corresponds to $R^1$ as defined above and $R^2$ is as defined above. When the carbonyl compound is a ketone and is used in the presence of the nitrogen containing base, it is believed that the free formaldehyde is removed by a Mannich reaction as illustrated by the following equation

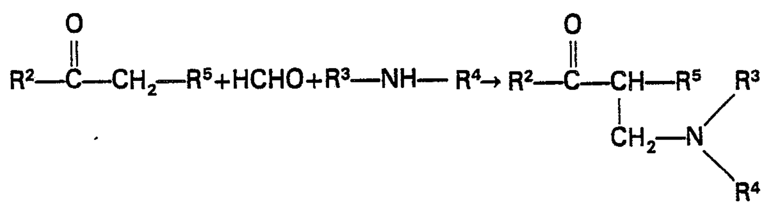

in which $—CH_2—R^5$ corresponds to $R^1$ as defined above and $R^2$, $R^3$ and $R^4$ are as defined above. A very good result is obtained if the resin is first treated with the carbonyl compound in the absence of the nitrogen containing base and the nitrogen containing base subsequently introduced in a further step of purification. In this way it is possible to produce an amino formaldehyde resin practically devoid of free formaldehyde.

As a practical matter, the carbon compound used in the invention is usually added in a slight molecular excess to the free formaldehyde in the resin. When no nitrogen containing base is used, 0.3 to 2.0 moles, preferably 0.8 to 1.5 moles of carbonyl compound is used per mole of free formaldehyde but as one mole of ketone can bind up to 4 moles of formaldehyde, the amount of ketone used can vary widely. The reaction is usually carried out at about pH 9 to 13.

When the nitrogen containing base is used, the amount of ketone used is generally 1.0 to 2.0 moles per mole of free formaldehyde. Similarly, the ammonia or the amine is usually used in a slight excess to the free formaldehyde, but as ammonia or a primary amine molecule can bind up to 3 and 2 molecules of formaldehyde, respectively, the proportions used can vary within wide limits. Generally, the amount of ammonia or amine added is 0.4 to 2.0, preferably 0.5 to 1.2, moles per mole of free formaldehyde. The pH value is usually neutral or slightly acidic and is preferably 5 to 8. The pH is normally adjusted with hydrochloric acid, which may be added as such or as an ammonium salt.

The temperature at which the process of the invention is best carried out is usually 15° to 80°C.

The present invention is further illustrated by the following Examples.

Example 1

Cyclohexanone in an amount of 11.8 g and 2 M NaOH in an amount of 10 ml were added to 100 g of an ordinary urea formaldehyde resin (Soamin 850, Soamin is a Registered Trade Mark) containing about 3% by weight free formaldehyde. Soamin 850 is an ethylated resin, dissolved in ethylene glycol monoethyl ether, and manufactured by Berol Kemi AB, Sweden.

After standing 4 hours at 20°C, the mixture was neutralised with formic acid. Analysis of the resin showed a concentration of free formaldehyde of 0.3% by weight.

Similar results were obtained when the cyclohexanone and the alkali were added to essentially preformed resin during the preparation of the resin in a volatile solvent before the last evaporation of the solvent.

Example 2

Methyl ethyl ketone in an amount of 7.9 g and 2 M NaOH in an amount of 20 ml were added to 100 g of an ordinary melamine formaldehyde resin (Soamin M 16) containing about 3% by weight free formaldehyde. Soamin M 16 is a methylated resin, dissolved in water, and manufactured by Berol Kemi AB, Sweden. After standing 4 hours at 20°C, the mixture was neutralised with formic acid. Analysis of the resin showed a concentration of free formaldehyde of 0.5% by weight.

Examples 3 to 5

The procedure of Example 1 was repeated with the exception that the cyclohexanone was replaced by 10.1 g chloro-2-propanone, or 18.0 g *p*-nitroacetophenone or 11.1 g 5-hydroxypentanal, respectively. Analysis of the resins showed that the concentration of free formaldehyde had decreased from about 3% by weight to 0.3%, 0.5%, and 0.6% by weight respectively.

Examples 6 to 9

The procedure of Example 2 was repeated with the exception that methyl ethyl ketone was replaced by 11.4 g 2,4-pentanedione, 9.6 g methoxy-2-propanone, 12.7 g acetonyl acetate or 14.2 g ethyl acetoacetate respectively. Analysis of the resins showed that the concentrations of free formaldehyde had decreased from about 3% by weight to about 0.2%, 0.3%, 0.6%, and 0.5% by weight respectively.

Example 10

The procedure of Example 1 was repeated with the exception that the NaOH was replaced by 3 ml 4 M LiOH. After 4 hours reaction time, the solution was neutralised with a solution of phosphoric acid in methyl ethyl ketone and then filtered. The concentration of free formaldehyde in the resin had decreased to 0.3% by weight.

Example 11

Cyclohexanone in an amount of 11.8 g and ammonium chloride in an amount of 6.2 g were added to 100 g of an ordinary melamine formaldehyde resin (Soamin M 16) containing about 3% by weight free formaldehyde.

Soamin M 16 is a methylated resin, dissolved in water, and manufactured by Berol Kemi AB, Sweden. The pH was adjusted to 6.0 to 6.5. After standing 2 hours at 20°C, the pH was raised to 8.5 by addition of sodium hydroxide. Analysis of the resin showed a concentration of free formaldehyde of 0.2% by weight.

Similar results were obtained when the cyclohexanone and the ammonium hydrochloride were added to essentially preformed resin during the preparation of the resin in a volatile solvent before the last evaporation of the solvent.

Example 12

The procedure of Example 11 was repeated with the exception that cyclohexanone was replaced by 7.9 g methyl ethyl ketone. Analysis of the resin showed that the amount of free formaldehyde had decreased to less than 0.1% by weight.

Example 13

The procedure of Example 11 was repeated with the exception that ammonium chloride was replaced by 7.3 g methylamine hydrochloride. Analysis of the resin showed that the amount of free formaldehyde had decreased to 0.4% by weight.

Example 14

Methyl ethyl ketone in an amount of 9.4 g and diethylamine in an amount of 13.9 g were added to 100 g of an ordinary urea formaldehyde resin (Soamin 850) containing about 3% by weight free formaldehyde. Soamin 850 is an ethylated resin, dissolved in ethylene glycol monomethyl ethyl, and manufactured by Berol Kemi AB, Sweden. The pH was adjusted to 6.0 to 6.5 with hydrochloric acid. After standing 0.5 hours at 50°C, the pH was raised to 8.5 by addition of sodium hydroxide. Analysis of the resin showed a concentration of free formaldehyde of 0.9% by weight.

Example 15

The procedure of Example 14 was repeated with the exception that diethylamine was replaced by 18.5 g diethanolamine. Analysis of the resin showed that the amount of free formaldehyde had decreased to 0.9% by weight.

Example 16

Acetophenone in an amount of 13.1 g and morpholine in an amount of 1.6 g were added to 100 g of a melamine resin (Soamin M16 see Example 11). The pH was raised to 12.0 by addition of sodium hydroxide. After standing 3 hours at 20°C, hydrochloric acid was added until the pH reached 6.0 to 6.5. After standing one further hour at 20°C, the pH was raised to 8.5 by addition of sodium hydroxide and the solution was filtered. Analysis of the resin showed a concentration of free formaldehyde of 0.8% by weight.

**Claims**

1. A process for the preparation of an

amino/formaldehyde resin having a concentration of free formaldehyde less than 1% by weight, by treating a preformed amino/formaldehyde resin containing free formaldehyde with a carbonyl compound, characterised in that the carbonyl compound is chloro-2-propanone, 5-hydroxypentanal or a ketone containing at least one $\alpha$-hydrogen atom and having 4 to 15 carbon atoms.

2. A process according to claim 1, wherein the carbonyl compound has the general formula:

$$R^2-\overset{\overset{\displaystyle O}{\|}}{C}-R^1$$

wherein $R^1$ and $R^2$, which may be the same or different, is each a hydrocarbon group, optionally substituted with an electron attracting moiety, or $R^1$ and $R^2$ together with the CO group to which they are attached, form a cyclic group having 4 to 8 carbon atoms in the ring, the ring being optionally substituted by an electron attracting moiety.

3. A process according to claim 2, wherein $R^1$ and $R^2$ are each an alkyl group having up to 8 carbon atoms.

4. A process according to claim 2, wherein the carbonyl compound is cyclohexanone, methyl ethyl ketone, p-nitroacetophenone, 2,4-pentanedione, 2-methoxy-propanone, acetonyl acetate or ethyl acetoacetate.

5. A process according to any one of the preceding claims, wherein 0.3 to 2.0 moles of carbonyl compound are added per mole of free formaldehyde.

6. A process according to any one of the preceding claims, wherein the reaction mixture has a pH of 9 to 13.

7. A process according to any one of claims 1 to 4, wherein the carbonyl compound is a ketone and the treatment is carried out in the presence of ammonia or a primary or secondary nitrogen-containing base having a molecular weight of less than 900, or of a salt thereof.

8. A process according to claim 7, wherein the nitrogen-containing base has the formula:

$$R^3-(NH-A)_n-NH-R^4 \qquad II$$

wherein $R^3$ and $R^4$, which may be the same or different, each is hydrogen or a hydrocarbon group which may optionally be substituted with a hydroxyl group, or $R^3$ and $R^4$ together with the group $(NH-A)_nNH$ form a cyclic group having 4 to 8 ring atoms, A is a bivalent hydrocarbon group preferably having 1 to 6 carbon atoms and n is 0 or an integer from 1 to 6.

9. A process according to claim 8, wherein $R^3$ is hydrogen, $R^4$ is hydrogen or a hydrocarbon group and n is 0.

10. A process according to any one of claims 7 to 9, wherein 1.0 to 2.0 moles of ketone and 0.4 to 2.0 moles of ammonia or the nitrogen-containing base are added per mole of free formaldehyde.

11. A process according to any one of claims 7 to 10, wherein the reaction mixture has a pH of 5 to 8.

**Patentansprüche**

1. Verfahren zur Herstellung eines Amino/Formaldehydharzes mit einer Konzentration an freiem Formaldehyd von weniger als 1 Gewichtsprozent durch Behandeln eines vorgebildeten Amino/Formaldehydharzes, das freiein Formaldehyd enthält, mit einer Carbonyl-verbindung, dadurch gekennzeichnet, daß die Carbonyl-verbindung Chlor-2-propanon, 5-Hydroxypentanal oder ein Keton ist, das mindestens ein $\alpha$-Wasserstoffatom und 4 bis 15 Kohlenstoffatome enthält.

2. Verfahren nach Anspruch 1, worin die Carbonylverbindung die allgemeine Formel hat:

$$R^2-\overset{\overset{\displaystyle O}{\|}}{C}-R^1$$

worin $R^1$ und $R^2$, die gleich oder verschieden sein können, jeweils eine Kohlenwasserstoffgruppe sind, die gegebenenfalls mit einer Elektronen anziehenden Gruppe substituiert ist, oder $R^1$ und $R^2$ zusammen mit der CO-Gruppe, an die sie gebunden sind, eine zyklische Gruppe mit 4 bis 8 Kohlenstoffatomen im Ring bilden, wobei der Ring gegebenenfalls durch eine Elektronen anziehende Gruppe substituiert ist.

3. Verfahren nach Anspruch 2, worin $R^1$ und $R^2$ jeweils eine Alkylgruppe mit bis zu 8 Kohlenstoffatomen sind.

4. Verfahren nach Anspruch 2, worin die Carbonylverbindung Cyclohexanon, Methylethylketon, p-Nitroacetophenon, 2,4-Pentandion, 2-Methoxy-propanon, Acetonylacetat oder Ethylacetoacetat ist.

5. Verfahren nach irgendeinem der vorangehenden Ansprüche, worin 0,3 bis 2,0 Mol der Carbonylverbindung pro Mol freiem Formaldehyd zugegeben werden.

6. Verfahren nach irgendeinem der vorangehenden Ansprüche, worin das Reaktionsgemisch einen pH von 9 bis 13 hat.

7. Verfahren nach irgendeinem der Ansprüche 1 bis 4, worin die Carbonylverbindung ein Keton ist und die Behandlung in Gegenwart von Ammoniak oder einer primären oder sekundären, Stickstoff-haltigen Base mit einem Molekulargewicht von weniger als 900 oder einem Salz davon durchgeführt wird.

8. Verfahren nach Anspruch 7, worin die Stickstoff-haltige Base die Formel

$$R^3-(NH-A)_n-NH-R^4 \qquad II$$

hat, worin $R^3$ und $R^4$, die gleich oder verschieden sein können, jeweils Wasserstoff oder eine Kohlenwasserstoffgruppe sind, die

gegebenenfalls mit einer Hydroxylgruppe substituiert sein kann, oder $R^3$ und $R^4$ zusammen mit der Gruppe $(NH—A)_nNH$ eine zyklische Gruppe mit 4 bis 8 Ringatomen bilden, A eine zweiwertige Kohlenwasserstoffgruppe mit vorzugsweise 1 bis 6 Kohlenstoffatomen ist und n 0 oder eine ganze Zahl von 1 bis 6 ist.

9. Verfahren nach Anspruch 8, worin $R^3$ Wasserstoff ist, $R^4$ Wasserstoff oder eine Kohlenwasserstoffgruppe ist und n den Wert 0 hat.

10. Verfahren nach irgendeinem der Ansprüche 7 bis 9, worin 1,0 bis 2,0 Mol Keton und 0,4 bis 2,0 Mol Ammoniak oder Stickstoffhaltige Base pro Mol freier Formaldehyd zugegeben werden.

11. Verfahren nach irgendeinem der Ansprüche 7 bis 10, worin das Reaktionsgemisch einen pH von 5 bis 8 hat.

## Revendications

1. Procédé de préparation d'une résine d'amino/formaldéhyde ayant une concentration en formaldéhyde libre inférieure à 1% en poids, par traitement d'une résine d'amino/formaldèhyde préformée, contenant du formaldéhyde libre, avec un composé carbonylé, procédé caractérisé en ce que le composé carbonylé est la chloro-2-propanone, le 5-hydroxypentanal ou une cétone contenant au moins un atome d'hydrogène en alpha et ayant 4 à 15 atomes de carbone.

2. Procédé selon la revendication 1, caractérisé en ce que le composé carbonylé répond à la formule générale:

$$R^2—\overset{\displaystyle O}{\overset{\|}{C}}—R^1$$

dans laquelle $R^1$ et $R^2$, qui peuvent être identiques ou différents, sont chacun un groupe hydrocarboné, éventuellement substitué par un reste attirant les électrons, ou bien $R^1$ et $R^2$, pris avec le groupe CO auquel ils sont rattachés, forment un groupe cyclique ayant 4 à 8 atomes de carbone dans le cycle, ce cycle étant éventuellement substitué par un reste attirant les électrons.

3. Procédé selon la revendication 2, caractérisé en ce qu $R^1$ et $R^2$ sont chacun un groupe alkyle ayant jusqu'à 8 atomes de carbone.

4. Procédé selon la revendication 2, caractérisé en ce que le composé carbonylé est la cyclohexanone, la méthyl-éthyl-cétone, la p-nitroacétophone, la 2,4-pentanedione, la 2-méthoxy-propanone, de l'acétonyl-acétate ou de l'acétoacétate d'éthyle.

5. Procédé selon l'une quelconque des revendications précédentes, caractérisé en ce qu'on a ajouté 0,3 à 2,0 moles du composé carbonylé par mole de formaldéhyde libre.

6. Procédé selon l'une quelconque des revendications précédentes, caractérisé en ce que le mélange réactionnel présente un PH de 9 à 13.

7. Procédé selon l'une quelconque des revendications 1 à 4, caractérisé en ce que le composé carbonylé est une cétone et en ce que l'on effectue le traitement en présence d'ammoniaque ou d'une base primaire ou secondaire contenant de l'azote et ayant un poids moléculaire inférieur à 900, ou d'un de leurs sels.

8. Procédé selon la revendication 7, caractérisé en ce que la base contenant de l'azote a pour formule:

$$R^3—(NH—A)_n—NH—R^4 \qquad (II)$$

dans laquelle $R^3$ et $R^4$, qui peuvent être identiques ou différents, sont chacun un atome d'hydrogène ou un groupe hydrocarboné qui peut être éventuellement substitué par un groupe hydroxyle, ou bien $R^3$ et $R^4$ forment, avec le groupe $(NH—A)_nNH$, un groupe cyclique ayant 4 à 8 atomes dans le cycle; A est un groupe hydrocarboné divalent ayant de préférence 1 à 6 atomes de carbone; et *n* est nul ou est un nombre entier de 1 à 6.

9. Procédé selon la revendication 8, caractérisé en ce que $R^3$ est un atome d'hydrogène, $R^4$ est un atoma d'hydrogène ou un groupe hydrocarboné, et *n* est nul.

10. Procédé selon l'une quelconque des revendications 7 à 9, caractérisé en ce que l'on ajoute 1,0 à 2,0 moles de cétone et 0,4 à 2,0 moles d'ammoniaque, ou de la base contenant de l'azote, par mole du formaldéhyde libre.

11. Procédé selon l'une quelconque des revendications 7 à 10, caractérisé en ce que le mélange réactionnel a un pH de 5 à 8.